# EUROPEAN PATENT SPECIFICATION

(11) **EP 3 882 452 B1**
(45) Date of publication and mention of the grant of the patent: **08.05.2024**
(21) Application number: 20163812.9
(22) Date of filing: 18.03.2020
(51) Int. Cl.: F02D 41/00, F02D 41/12, F02D 41/14, F02D 41/22, F01L 1/46

(54) **A METHOD FOR DETECTING VALVE LEAKAGE IN A COMBUSTION ENGINE**
VERFAHREN ZUR ERKENNUNG VON VENTILLECKAGE IN EINER BRENNKRAFTMASCHINE
PROCÉDÉ DE DÉTECTION DE FUITE DE SOUPAPE D'UN MOTEUR À COMBUSTION

(43) Date of publication of application: 22.09.2021
(73) Proprietor: Volvo Car Corporation, 40531 Göteborg (SE)
(72) Inventor: STORM, Andreas, SE-413 01 GÖTEBORG (SE); SÄRNBERGER, Niklas, SE-431 69 MÖLNDAL (SE); FRIDMAR, Fredrik, SE-523 31 ULRICEHAMN (SE)
(74) Representative: Kransell & Wennborg KB

(56) References cited:
- EP-A1- 1 580 407
- EP-A1- 3 536 939
- WO-A1-2016/065047
- US-A1- 2017 101 956

## Description

### TECHNICAL FIELD

The present disclosure generally relates to a method for detecting valve leakage in at least one valve at a cylinder intake manifold or exhaust manifold of a vehicle engine.

### BACKGROUND

In a typical combustion engine, one set of valves is often arranged to control the flow of an air/fuel mixture into the cylinders of the combustion engine, and another set of valves to control the release of exhaust gases from the cylinder. Camshafts are often used for controlling the intake and exhaust valves in the combustion engines. As the camshaft rotates, the cams move around the rotation axis of the shaft and causes the valves to open or close depending on the rotational position of the camshaft.

A crankshaft controls the stroke of a piston in the cylinder according to a combustion cycle of the engine. The motion of the crankshaft is synchronized with the motion of the camshaft in order to timely open and close the valves during the combustion cycle of the engine.

It is important that the valves operate accurately and with no leakage. Valve leakage during engine operation can for example cause engine misfire, damage to exhaust aftertreatment systems, intake manifold excess heat. However, these events may be avoided if valve leakage is detected in time.

### SUMMARY

The subject-matter of the present disclosure generally relates to a method for detecting valve leakage of a least one valve at a cylinder intake manifold or exhaust manifold of a vehicle engine. Methods of diagnosing the valve operation of an engine by monitoring intake or exhaust manifold pressure are disclosed in WO 2016/065047 A1 or US 2017/101956 A1.

According to a first aspect of the present disclosure, there is provided a method for detecting valve leakage in a least one valve at a cylinder intake manifold or exhaust manifold of a vehicle engine, the method comprising: acquiring, while operating the vehicle engine at steady state operating conditions, a set of pressure data points indicative of the pressure in the cylinder intake manifold or exhaust manifold for crankshaft angular positions covering crankshaft angular rotation degrees such that each of the at least one valve has opened at least one time, wherein the set of pressure data points is sampled as a function of crankshaft angular positions; and determining at least one test value based on the set of pressure data points, the test value reflecting a deviation of the set of pressure data points sampled as a function of crankshaft angular positions from a steady periodic pattern indicative of a manifold without leakage, wherein a valve leakage is detected based on a comparison of the at least one test value to a threshold value.

The inventors realized that if a set of pressure data points is sampled for a time duration and the pressure data is correlated with the crankshaft angular positions, the pressure data points as a function of crankshaft angular positions provides a periodic pattern, e.g. a sine curve. At steady state engine operating conditions and without any valve leakages the periodic pattern is relatively steady. The inventors realized that in the event of valve leakage, deviations appear in the periodic pattern. Based on recognizing the deviations a valve leakage is identified.

To this end, the pressure data points are sampled as a function of crankshaft angle position.

Further, a test value is determined based on the set of pressure data points. The test value reflects the deviation of the data pattern from a steady pattern indicative of a manifold without valve leakage.

For example, a pattern recognition algorithm may be applied to the set of pressure data points sampled as a function of crankshaft angle for determining the test value and for detecting a valve leakage.

Preferably, the crankshaft angular rotation of a complete engine operation cycle is 720 degrees. Thus, the pressure data points may be correlated to crankshaft angular rotation degrees in the range 0-720 degrees, i.e. two complete revolutions of the crankshaft. In this way, for a four-stroke engine, it is ensured that each of the intake manifold valves or each of the exhaust manifold valves have opened once.

Further, by correlating the test value to a crankshaft angular position, it can be determined which of the valves of the engine that are leaking.

The embodiments herein may be applied to the valves at the cylinder intake manifold. Analogously, the embodiments herein may be applied to the valves at the cylinder exhaust manifold.

Further features of, and advantages with, embodiments of the present disclosure will become apparent when studying the appended claims and the following description. The skilled person realize that different features of the present invention may be combined to create embodiments other than those described in the following, without departing from the scope of the present invention.

### BRIEF DESCRIPTION OF DRAWINGS

These and other aspects of the present invention will now be described in more detail, with reference to the appended drawings showing example embodiments of the present disclosure, wherein:
FIG. 1A conceptually illustrates an exemplary combustion engine for a vehicle;
FIG. 1B schematically illustrates an intake manifold and an exhaust manifold with respective valves for a vehicle engine comprising a set of cylinders;
FIG. 2 is a flow-chart of method steps according to embodiments of the present disclosure;
FIG. 3 illustrates a graph of example pressure data points for a deviating pattern and a normal pattern;
FIG. 4 illustrates a graph of example pressure data points for a deviating pattern and a normal pattern;
FIG. 5 illustrates a graph of example pressure data points for a deviating pattern and a normal pattern; and
FIG 6 is a box diagram illustrating a control unit operation scheme according to embodiments of the present disclosure.

### DETAILED DESCRIPTION

In the present detailed description, various embodiments of a method according to the present disclosure are described. However, the methods of the present disclosure may be embodied in many different forms and should not be construed as limited to the embodiments set forth herein; rather, these embodiments are provided for thoroughness and completeness, and to fully convey the scope of the invention to the skilled person. Like reference characters refer to like elements throughout.

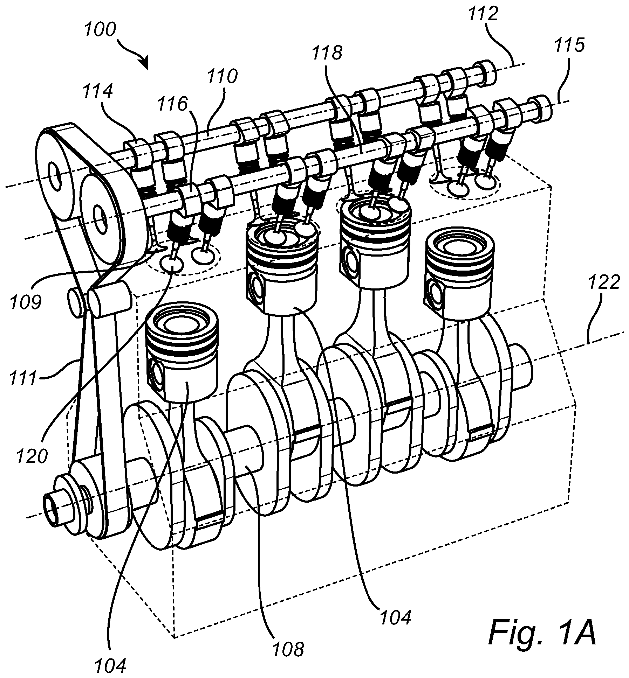

Fig. 1A conceptually illustrates an exemplary combustion engine 100 for a vehicle. The combustion engine comprises multiple cylinders (not shown) and multiple pistons 104. In each of the cylinder is a respective piston 104 arranged. The pistons 104 are forced to move in the respective cylinder by the combustion of fuel in the cylinder volume. The stroke motion of the piston in the cylinder is transferred to a crankshaft 108 for transferring propulsion power to the driveline (not shown) of the vehicle comprising the combustion engine 100.

Further, in order to allow an air-fuel mixture into the cylinder volume a valve 109 is configured to open an inlet to the cylinder volume at timed intervals. The timing is provided by a linking mechanism 111 (a so-called "timing belt") which is configured to rotate a first camshaft 110 about a rotation axis 112 such that a cam 114 of the camshaft 110 causes the first valve 109 to open and close in a synchronized manner with respect to the rotation of the crankshaft 108 and thereby with respect to the strokes of the piston 104. The valves 109 are arranged in an intake manifold of the engine 100.

Furthermore, a second camshaft 118 is configured to open and close a second valve 120. The timing of the operation of the second valves 120 is also is provided by the linking mechanism 111. Thus, the linking mechanism is configured to rotate the second camshaft 118 about a rotation axis 115 such that a cam 116 of the second camshaft 118 causes the second valve 120 to open and close in a synchronized manner with respect to the rotation of the crankshaft 108 and thereby with respect to the strokes of the piston 104.

The second valves 120 controls the outflow of exhaust from the cylinder volumes in a synchronized manner with the rotation of the crankshaft 108 and thereby with respect to the strokes of the piston 104. The second valves 120 are arranged in an exhaust manifold of the engine 100.

Overall, the timing of the opening and closing of the intake manifold valves 109 with respect to the rotation of the crankshaft 108 about its axis 122 is synchronized. Therefore, as the pressure in the intake manifold accommodating the intake valves 109 varies with the opening and closing of the intake manifold valves 109, the pressure in the intake manifold is also synchronized with the crankshaft rotation, and it is therefore possible to correlate the pressure in the intake manifold with the crankshaft angular positions to thereby produce a periodic pressure versus crankshaft angle pattern.

Analogously, the timing of the opening and closing of the exhaust manifold valves 120 with respect to the rotation of the crankshaft 108 about its axis 122 is synchronized. Therefore, as the pressure in the exhaust manifold accommodating the exhaust valves 120 varies with the opening and closing of the exhaust manifold valves 120, the pressure in the exhaust manifold is also synchronized with the crankshaft rotation. Thus, also for the exhaust manifold pressure, a periodic pattern of pressure versus crankshaft angle is producible.

Crankshaft angular positions are rotational orientations of the crankshaft 108 about its rotation axis 122.

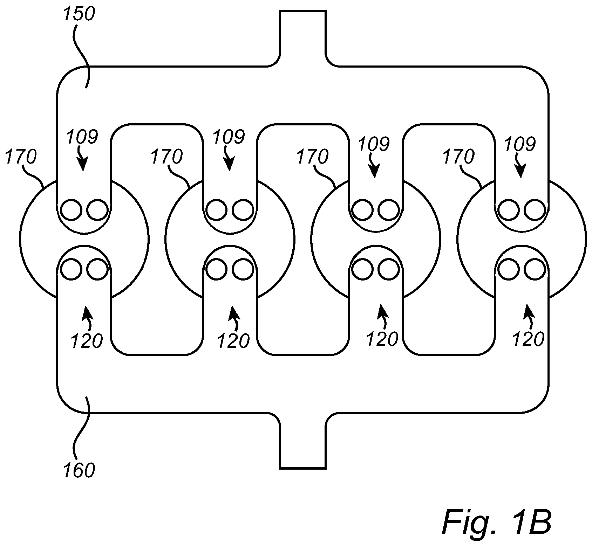

Fig. 1B conceptually illustrates the intake manifold 150 and the exhaust manifold 160. The intake manifold 150 have associated intake valves 109 at each of the cylinders 170 and the exhaust manifold 160 has associated exhaust valves 120 at each of the cylinders 170. As mentioned above, the valves 109 are arranged to control intake of air/fuel mixture into the cylinders 170 and the valves 120 are arranged to control the outflow of exhaust gas from the cylinders 170. The pressure in the intake manifold 150 are in embodiments herein measured. In other embodiments, the pressure in the exhaust manifold 160 is measured.

Generally, the intake manifold provides the air and fuel mix in the cylinder volumes, and the exhaust manifold leads the exhaust gas from the cylinders to an aftertreatment system.

Accordingly, as was realized by the inventors, in an engine with no valve leakage, the pressure in the intake manifold or exhaust manifold with respect to crankshaft angular position is relatively reproducible and predictable when the engine is steadily operative. However, if one or several of the valves in e.g. the intake manifold is leaking, the pattern of the pressure in the intake manifold with respect to crankshaft angular position deviates from the pattern produced with no leaking valve.

That the engine is operating steadily relates to that no gearshift is presently occurring, the engine is warm, and that the engine speed and load is within normal operating range.

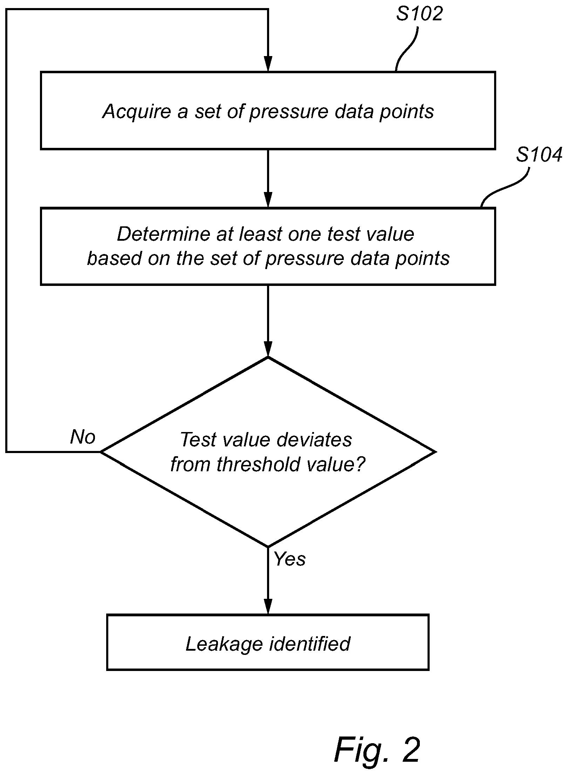

Fig. 2 is a flow-chart of method steps according to embodiments of the present disclosure. Herein, a method is disclosed for detecting valve leakage of a least one valve at a cylinder intake manifold or exhaust manifold of a vehicle engine.

The method comprises a step S102 of acquiring a set of pressure data points indicative of the pressure in the cylinder intake manifold or exhaust manifold for crankshaft angular positions covering crankshaft angular rotation degrees such that each of the at least one valve has opened at least one time. In order to be able to evaluate each of the valves 109, or each of the valves 120, pressure data points for a sufficient range of angular positions of the crankshaft that covers the opening of each valve is acquired.

Further, in step S104, determining at least one test value based on the set of pressure data points. A valve leakage is detected based on a comparison of the at least one test value to a threshold value. For example, if the test value exceeds a threshold value, it may be concluded that the intake manifold has a leaking valve, whereby a leaking valve is identified. Depending on the test value and on the selected threshold, a leaking valve may be considered detected or identified if the test value is below a threshold value. In some embodiments is one test value per cylinder determined.

If it is concluded that no leaking valve is detected, the method may return to step S102. If a leak is detected, actions may be taken, and the method may also in this case return to step S102. The method may be continuously repeated and be performed in real-time, i.e. concurrently with pressure data collection.

In the explicitly described embodiments it is mainly referred to the intake manifold pressure. However, the embodiments of the present disclosure may equally well and analogously be applied to the exhaust manifold pressure.

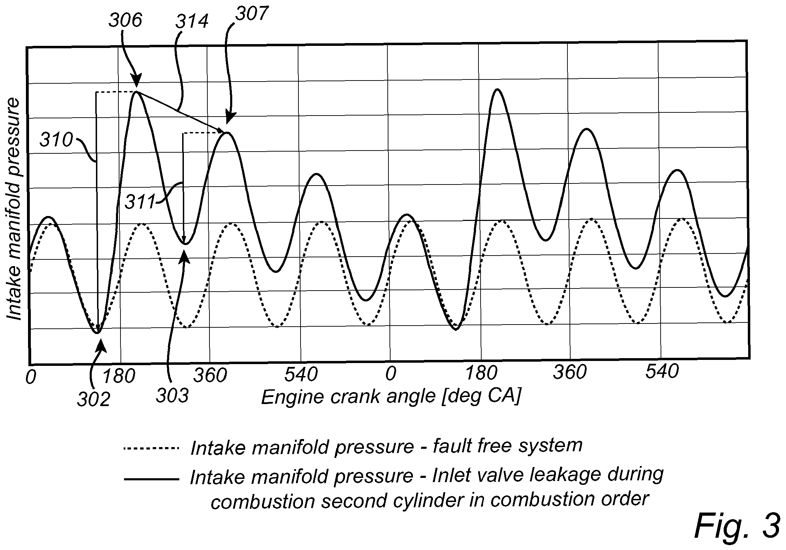

The set of pressure data points is advantageously sampled as a function of crankshaft angular positions, as is illustrated in figs. 3-5.

Fig. 3 is a graph illustrating example pressure data points indicating intake manifold pressure versus crankshaft angle position, for a fault free intake manifold, dashed line, and for an intake manifold having a leaking valve, solid line. The pressure for the fault free intake manifold is periodic and with a stable amplitude, i.e. the amplitude of the periodic pattern shown as the dashed line is the same for the entire range of crankshaft angle position on the x-axis of the graph. Here the shown range of crankshaft angle is 1440 degrees, however, for embodiments herein 720 degrees is enough for performing valve leakage detection.

The pressure data shown in fig. 3 is for a four cylinder, four-stroke engine, and during 720 degrees rotation of the crankshaft each of the inlet valves 109 has opened once. One period in the patterns represent the opening and closing of a valve (inlet or exhaust) for one of the cylinders of the engine. Generally, the pressure decreases in the intake manifold during valve opening for filling stroke and increases at valve closure prior to next cylinder valves open.

The pressure data points shown in the solid line of in fig. 3 represents the intake manifold pressure with an inlet valve leakage during combustion in the second cylinder in the combustion order. This is understood from the deviating pattern of the solid line that begins at the second peak at local maximum 306, i.e. corresponding to the inlet valve in the second cylinder. Further, a leak during the combustions means that the high pressure from the cylinder pressurizes also the intake manifold, whereby a pressure offset is caused to the solid curve representing the pressure in the intake manifold. The offset falls relatively slowly back to the normal level, but appears again the next time combustion occurs in the second cylinder.

The pressure for the leaking intake manifold, shown in the solid line, deviates from the pressure of the fault free system represented by the dashed line. For example, the amplitude of the periodic pattern for the pressure of the leaking intake manifold, solid line, varies over 720 degrees. Several deviations can be found in the pattern (solid) representing the faulty intake manifold from the pattern of the fault free intake manifold.

Accordingly, embodiments of the present disclosure are based on the realization that the pressure as a function of crankshaft angle, in an intake or exhaust manifold having a leaking valve deviates from the pressure as a function of crankshaft angle, in a fault free intake or exhaust manifold. Detecting a leaking valve in time may prevent engine misfires, damage to aftertreatment systems, and excess heat in the intake manifold.

In order to evaluate the leak status of the valves in the intake manifold a test value is determined based on the pressure data points. A test value may be determined by performing pattern recognition on the pressure data points. The test value may in such case reflect the degree of deviation of the pressure data points from pressure data points of a fault free intake manifold. The pattern recognition algorithm may have been taught to recognize patterns that represent the pressure pattern for intake manifolds with leaking valves. The test value may reflect the similarity score of the pattern recognition algorithm output with known patterns representing the pressure pattern for intake manifolds with leaking valves.

Pattern recognition algorithms are *per se* known and many different variations, e.g. supervised learning algorithms or unsupervised learning algorithms, e.g. classification algorithms, clustering algorithms, etc., are possible and within the scope of the appended claims.

Another example test value may be based on a difference between pressure data points. For example, the pressure difference between local minima 302 and 303 in the pressure data points versus crankshaft angle would indicate that the pressure data points deviate from the pressure data of a fault free intake manifold for which such difference would be close to zero. In a similar way may the pressure difference between local maxima 306 and 307 in the pressure data points versus crankshaft angle indicate that the pressure data points deviate from the pressure data of a fault free intake manifold.

As a further example, the test value may be based on a pressure difference between local maximum and local minimum pressure data points in the set of pressure data points. For example, if the first difference 310 between the local maximum 306 and the adjacent local minimum 302 deviates from a second difference 311 between the local maximum 307 and the adjacent local minimum 303 by more than a threshold value, the intake manifold may be concluded to comprise a leaking valve.

Another possible implementation is that the test value is based on a derivative of pressure data points with respect to crankshaft angular positions. For example, the test value may be based on a derivative between local maximum pressure data points 306 and 307 in the set of pressure data points as a function of crankshaft angular positions. Thus, the inclination of the line 314 between local maximum points may be the test value. In the dashed curve representing a fault free intake manifold such derivative would be close to zero. Thus, if the inclination of line 314 deviates by some threshold from zero, the intake manifold may be concluded to comprise a leaking valve. Analogously, the test value may be based on a derivative between local minimum pressure data points, e.g. 302 and 303 in the set of pressure data points with respect to crankshaft angular positions.

Note that other types analysis may be performed for determining a test value that may indicate a leaking valve. For example, it is conceivable to perform a Fourier analysis to detect frequency components of the pressure data points. For a fault free intake manifold or exhaust manifold, the Fourier analysis would typically show a single dominant frequency component, whereas a Fourier analysis of pressure data points sampled from a faulty intake manifold would include more frequency components.

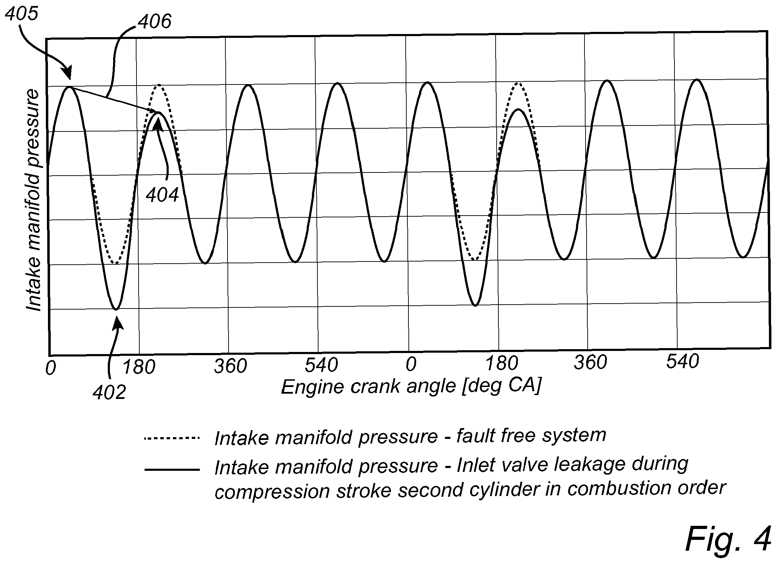

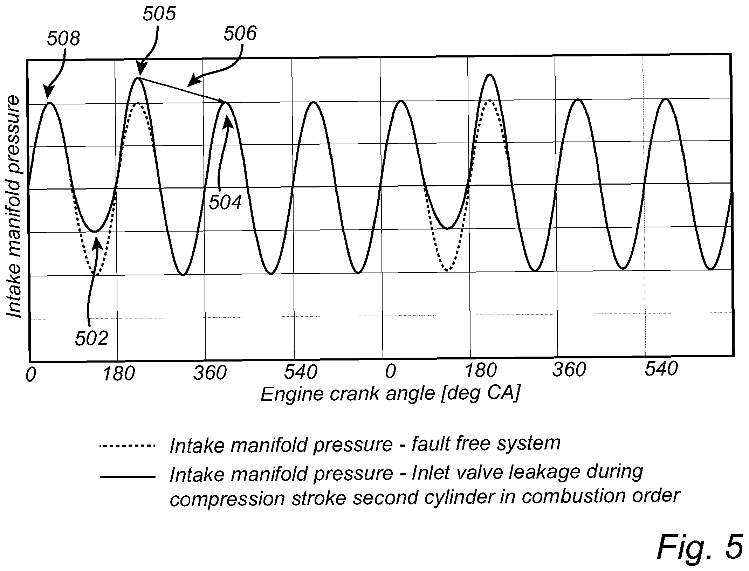

Figs. 4 and 5 are graphs illustrating other examples of pressure data points indicating intake manifold pressure versus crankshaft angle position, for a fault free intake manifold, dashed line, and for an intake manifold having a leaking valve, solid line.

In fig. 4, local minimum is denoted 402 and local maxima are denoted 404 and 405. For a test value of a derivative, the inclination of the line 406 between adjacent local maxima may be used. The pressure data points in the solid line represents example intake manifold pressure for an intake manifold with an inlet valve leak during a compression stroke in the second cylinder in the combustion order.

In fig. 5, local minimum is denoted 502 and local maxima are denoted 504, 505, and 508. For a test value of a derivative, the inclination of the line 506 between adjacent local maxima may be used. The pressure data points in the dashed line represents another example of intake manifold pressure for an intake manifold with an inlet valve leak during a compression stroke in the second cylinder in the combustion order.

The patterns arising in the pressure data shown in figs. 3-5 reflect the number of cylinders in the engine. Since the combustion cycle of engines is known, it is possible to relate the periods of the periodic patterns in the pressure data to which valve is being opened at a certain crankshaft angle position. For a four-cylinder engine, there will be four periods in the periodic pressure pattern, if the crankshaft angle range covers two revolutions of the crankshaft, e.g. 720 degrees. Based on this, it can be determined that the first peak in the periodic pattern corresponds to a valve opening to the first cylinder of the engine.

Accordingly, when the vehicle engine comprises a set of cylinders each having at least one associated valve at the respective intake manifold or exhaust manifold, the method may comprise determining a test value for each of the cylinders and determining which of the cylinders that has an associated leaking valve based on which of the test values that deviates from the threshold value. For example, referring now to figs. 4 and 5, a test value related to the second local maximum 404, see 505 in fig. 5, deviates from the previous local maximum 405, see 508 in fig. 5, it can be concluded that it is a valve associated with the second cylinder in the combustion order that is leaking.

In one embodiment, also related to when the vehicle engine comprises a set of cylinders each having at least one associated valve at the respective intake manifold or exhaust manifold, the method may comprise determining a test value for each of the cylinders and determining which of the cylinders that has an associated leaking valves based on which of the test values that deviates from the other test values. In other words, if test values associated with a respective cylinder are compared to each other, and one of the test values deviates more than a threshold value from the each of the other test values, then the cylinder associated with the one deviating test value may be concluded to be leaking.

In some embodiments, the fuel supply to a cylinder with a leaking valve is turned off.

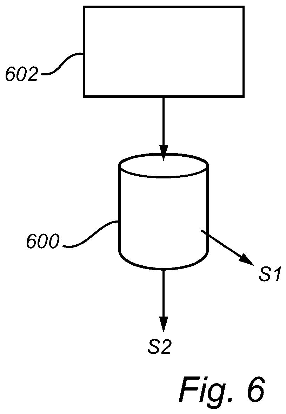

Fig. 6 is a box diagram illustrating a control unit operation scheme according to embodiments of the present disclosure. The control unit 600 is configured for detecting a valve leakage of a least one valve in a cylinder intake manifold or exhaust manifold of a vehicle engine.

The control unit 600 is configured to acquire a set of pressure data points indicative of the pressure in the cylinder intake manifold or exhaust manifold at crankshaft angular positions covering crankshaft angular rotation degrees such that each of the at least one valve has opened at least one time. The pressure data points may be acquired from a pressure sensor 602 arranged in the intake manifold or exhaust manifold, depending on which manifold is monitored.

Further, the control unit 600 is configured to determine at least one test value based on the set of pressure data points, wherein a valve leakage is detected based on a comparison of the at least one test value to a threshold value. Thus, the control unit 600 may output a signal *S1* indicative of a leaking valve.

Further, the control unit may be configured to, when a valve leakage is detected, provide a control signal *S2* for turning off a fuel supply to a cylinder with the leaking valve.

In some embodiments, the control unit may be configured to apply a pattern recognition algorithm to the set of pressure data points for determining the test value and for detecting a valve leakage.

The control unit is configured to sample the pressure data points as a function of crankshaft angular position.

Crankshaft angular positions may be a crankshaft angle, or crankshaft angular orientation.

A control unit may include a microprocessor, microcontroller, programmable digital signal processor or another programmable device, as well as be embedded into the vehicle/power train control logic/hardware. The control unit may also, or instead, include an application-specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The control unit may comprise modules in either hardware or software, or partially in hardware or software and communicate using known transmission buses such as CAN-bus and/or wireless communication capabilities. Thus, communication between control units, or between control units and audio capturing devices, image capturing systems, image capturing devices, etc. may be accomplished by various means know in the art. For example, the communication may be hardwired, using known transmission buses such as CAN-bus and/or wireless communication capabilities.

A control unit of the present disclosure is generally known an ECU, electronic control unit.

There is further provided, according to aspects of the present disclosure, a vehicle comprising the control unit 600.

There is further provided, according to aspects of the present disclosure a computer program product according to claim 14 comprising a computer readable medium having stored thereon computer program means for detecting valve leakage of a least one valve at a cylinder intake manifold or exhaust manifold of a vehicle engine, wherein the computer program product comprises: code for determining at least one test value based on an acquired set of pressure data points, wherein the set of pressure data points are indicative of the pressure in the cylinder intake manifold or exhaust manifold at known crankshaft angle positions; and code for detecting a valve leakage is based on relation between the at least one test value and a threshold value.

The computer program product may comprise code for applying a pattern recognition algorithm to the set of pressure data points for determining the test value and for detecting a valve leakage.

The methods described in the present disclosure are equally applicable to the cylinder intake manifold and to the cylinder exhaust manifold.

Accordingly, there is provided a method according to claim 1 for detecting valve leakage in a least one valve at a cylinder intake manifold of a vehicle engine, the method comprising: acquiring a set of pressure data points indicative of the pressure in the cylinder intake manifold or exhaust manifold for crankshaft angular positions covering crankshaft angular rotation degrees such that each of the at least one valve has opened at least one time; and determining at least one test value based on the set of pressure data points, wherein a valve leakage is detected based on a comparison of the at least one test value to a threshold value.

In addition, there is provided a method according to claim 1 for detecting valve leakage in a least one valve at a cylinder exhaust manifold of a vehicle engine, the method comprising: acquiring a set of pressure data points indicative of the pressure in the cylinder intake manifold or exhaust manifold for crankshaft angular positions covering crankshaft angular rotation degrees such that each of the at least one valve has opened at least one time; and determining at least one test value based on the set of pressure data points, wherein a valve leakage is detected based on a comparison of the at least one test value to a threshold value.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

Various examples have been described. These and other examples are within the scope of the following claims.

## Claims

1. A method for detecting a valve leakage in a least one valve at a cylinder intake manifold or exhaust manifold of a vehicle engine, the method comprising:
acquiring, while operating the vehicle engine at steady state operating conditions, a set of pressure data points indicative of the pressure in the cylinder intake manifold or exhaust manifold for crankshaft angular positions covering crankshaft angular rotation degrees such that each of the at least one valve has opened at least one time, wherein the set of pressure data points is sampled as a function of crankshaft angular positions; and
determining at least one test value based on the set of pressure data points, the test value reflecting a deviation of the set of pressure data points sampled as a function of crankshaft angular positions from a steady periodic pattern indicative of a manifold without leakage, wherein a valve leakage is detected based on a comparison of the at least one test value to a threshold value.

2. The method according to claim 1, comprising applying a pattern recognition algorithm to the set of pressure data points for determining the test value and for detecting a valve leakage.

3. The method according to any one of the preceding claims, wherein the crankshaft angular rotation degrees are about 720 degrees.

4. The method according to any one of the preceding claims, wherein the test value is based on a difference between pressure data points.

5. The method according to any one of the preceding claims, wherein the test value is based on a derivative of pressure data points with respect to crankshaft angular positions.

6. The method according to claim 5, wherein the test value is based on a derivative between local maximum pressure data points in the set of pressure data points with respect to crankshaft angular positions.

7. The method according to claim 5, wherein the test value is based on a derivative between local minimum pressure data points in the set of pressure data points with respect to crankshaft angular positions.

8. The method according to any one of the claims 1 to 4, wherein the test value is based on a difference between local maximum and local minimum pressure data points in the set of pressure data points.

9. The method according to any one of claims 1 to 4, wherein the test value is based on a difference between local maximum pressure data points in the set of pressure data points.

10. The method according to any one of the preceding claims, wherein the vehicle engine comprises a set of cylinders each having at least one associated valve at the respective intake manifold or exhaust manifold, the method comprises determining a test value for each of the cylinders and determining which of the cylinders that has an associated leaking valve based on which of the test values that deviates from the threshold value.

11. The method according to any one of the preceding claims, wherein the vehicle engine comprises a set of cylinders each having at least one associated valve at the respective intake manifold or exhaust manifold, the method comprises determining a test value for each of the cylinders and determining which of the cylinders that has an associated leaking valve based on which of the test values that deviates from the other test values.

12. The method according to anyone of the preceding claims, comprising:
when a valve leakage is detected, turning off a fuel supply to a cylinder with the leaking valve.

13. A control unit for detecting a valve leakage in a least one valve at a cylinder intake manifold or exhaust manifold of a vehicle engine, the control unit being configured to:
acquire, while operating the vehicle engine at steady state operating conditions, a set of pressure data points indicative of the pressure in the cylinder intake manifold or exhaust manifold at crankshaft angular positions covering crankshaft angular rotation degrees such that each of the at least one valve has opened at least one time, wherein the set of pressure data points is sampled as a function of crankshaft angular positions; and
determine at least one test value based on the set of pressure data points, the test value reflecting a deviation of the set of pressure data points is sampled as a function of crankshaft angular positions from a steady periodic pattern indicative of a manifold without leakage, wherein a valve leakage is detected based on a comparison of the at least one test value to a threshold value.

14. A computer program product comprising a computer readable medium having stored thereon computer program means for detecting a valve leakage of a least one valve at a cylinder intake manifold or exhaust manifold of a vehicle engine, wherein the computer program product comprises:
code for determining at least one test value based on an acquired set of pressure data points acquired while operating the vehicle engine at steady state operating conditions, wherein the set of pressure data points are indicative of the pressure in the cylinder intake manifold or exhaust manifold at known crankshaft angle positions wherein the set of pressure data points is sampled as a function of crankshaft angular positions; and
code for detecting a valve leakage is based on relation between the at least one test value and a threshold value, the test value reflecting a deviation of the set of pressure data points is sampled as a function of crankshaft angular positions from a steady periodic pattern indicative of a manifold without leakage.

## Patentansprüche

1. Verfahren zum Detektieren von Ventilleckage in zumindest einem Ventil an einem Zylinderansaugkrümmer oder Abgaskrümmer einer Fahrzeugkraftmaschine, wobei das Verfahren Folgendes umfasst:
Erfassen, während des Betreibens der Fahrzeugkraftmaschine bei stabilen Betriebsbedingungen, einer Menge von Druckdatenpunkten, die indikativ für den Druck im Zylinderansaugkrümmer oder Abgaskrümmer sind, für Kurbelwinkelpositionen, die Kurbelwinkelrotationsgrade abdecken, sodass jedes aus dem einen oder den mehreren Ventilen sich zumindest einmal geöffnet hat, wobei die Menge von Druckdatenpunkten als eine Funktion von Kurbelwinkelpositionen abgetastet wird; und
Bestimmen zumindest eines Testwerts basierend auf der Menge von Druckdatenpunkten, wobei der Testwert eine Abweichung der Menge von Druckdatenpunkten, die als eine Funktion von Kurbelwinkelpositionen abgetastet wurden, von einem stabilen periodischen Muster widerspiegelt, das indikativ für einen Krümmer ohne Leckage ist, wobei eine Ventilleckage basierend auf einem Vergleich des zumindest einen Testwerts mit einem Schwellwert detektiert wird.

2. Verfahren nach Anspruch 1, umfassend Anwenden eines Mustererkennungsalgorithmus auf die Menge von Druckdatenpunkten zum Bestimmen des Testwerts und zum Detektieren einer Ventilleckage.

3. Verfahren nach einem der vorhergehenden Ansprüche, wobei die Kurbelwinkelrotationsgrade etwa 720 Grad sind.

4. Verfahren nach einem der vorhergehenden Ansprüche, wobei der Testwert auf einer Differenz zwischen Druckdatenpunkten basiert.

5. Verfahren nach einem der vorhergehenden Ansprüche, wobei der Testwert auf einer Ableitung von Druckdatenpunkten bezüglich Kurbelwinkelpositionen basiert.

6. Verfahren nach Anspruch 5, wobei der Testwert auf einer Ableitung zwischen lokal maximalen Druckdatenpunkten in der Menge von Druckdatenpunkten bezüglich Kurbelwinkelpositionen basiert.

7. Verfahren nach Anspruch 5, wobei der Testwert auf einer Ableitung zwischen lokal minimalen Druckdatenpunkten in der Menge von Druckdatenpunkten bezüglich Kurbelwinkelpositionen basiert.

8. Verfahren nach einem der Ansprüche 1 bis 4, wobei der Testwert auf einer Differenz zwischen lokal maximalen und lokal minimalen Druckdatenpunkten in der Menge von Druckdatenpunkten basiert.

9. Verfahren nach einem der Ansprüche 1 bis 4, wobei der Testwert auf einer Differenz zwischen lokal maximalen Druckdatenpunkten in der Menge von Druckdatenpunkten basiert.

10. Verfahren nach einem der vorhergehenden Ansprüche, wobei die Fahrzeugkraftmaschine eine Menge von Zylindern umfasst, die jeweils zumindest ein zugehöriges Ventil am entsprechenden Ansaugkrümmer oder Abgaskrümmer umfassen, wobei das Verfahren Folgendes umfasst: Bestimmen eines Testwerts für jeden der Zylinder und Bestimmen, welcher der Zylinder ein zugehöriges undichtes Ventil aufweist, basierend darauf, welcher der Testwerte vom Schwellwert abweicht.

11. Verfahren nach einem der vorhergehenden Ansprüche, wobei die Fahrzeugkraftmaschine eine Menge von Zylindern umfasst, die jeweils zumindest ein zugehöriges Ventil am entsprechenden Ansaugkrümmer oder Abgaskrümmer umfassen, wobei das Verfahren Folgendes umfasst: Bestimmen eines Testwerts für jeden der Zylinder und Bestimmen, welcher der Zylinder ein zugehöriges undichtes Ventil aufweist, basierend darauf, welcher der Testwerte von den anderen Testwerten abweicht.

12. Verfahren nach einem der vorhergehenden Ansprüche, das Folgendes umfasst:
wenn eine Ventilleckage detektiert wird, Ausschalten einer Kraftstoffversorgung zu einem Zylinder mit dem undichten Ventil.

13. Steuereinheit zum Detektieren von Ventilleckage in zumindest einem Ventil an einem Zylinderansaugkrümmer oder Abgaskrümmer einer Fahrzeugkraftmaschine, wobei die Steuereinheit ausgelegt ist zum:
Erfassen, während des Betreibens der Fahrzeugkraftmaschine bei stabilen Betriebsbedingungen, einer Menge von Druckdatenpunkten, die indikativ für den Druck im Zylinderansaugkrümmer oder Abgaskrümmer sind an Kurbelwinkelpositionen, die Kurbelwinkelrotationsgrade abdecken, sodass jedes des zumindest einen Ventils sich zumindest einmal geöffnet hat, wobei die Menge von Druckdatenpunkten als eine Funktion von Kurbelwinkelpositionen abgetastet wird; und
Bestimmen zumindest eines Testwerts basierend auf der Menge von Druckdatenpunkten, wobei der Testwert eine Abweichung der Menge von Druckdatenpunkten, die als eine Funktion von Kurbelwinkelpositionen abgetastet wurden, von einem stabilen periodischen Muster widerspiegelt, das indikativ für einen Krümmer ohne Leckage ist, wobei eine Ventilleckage basierend auf einem Vergleich des zumindest einen Testwerts mit einem Schwellwert detektiert wird.

14. Computerprogrammprodukt, umfassend ein computerlesbares Medium, auf dem Computerprogrammmittel zum Detektieren einer Ventilleckage von zumindest einem Ventil an einem Zylinderansaugkrümmer oder Abgaskrümmer einer Fahrzeugkraftmaschine, wobei das Computerprogrammprodukt Folgendes umfasst:
Code zum Bestimmen zumindest eines Testwerts basierend auf einer erfassten Menge von Druckdatenpunkten, die beim Betreiben der Fahrzeugkraftmaschine unter stabilen Betriebsbedingungen erfasst wurden, wobei die Menge von Druckdatenpunkten indikativ für den Druck im Zylinderansaugkrümmer oder Abgaskrümmer bei bekannten Kurbelwinkelpositionen ist, wobei die Menge von Druckdatenpunkten als eine Funktion von Kurbelwinkelpositionen abgetastet wird; und
Code zum Detektieren einer Ventilleckage, der auf einer Beziehung zwischen dem zumindest einen Testwert und einem Schwellwert basiert, wobei der Testwert, der eine Abweichung der Menge von Druckdatenpunkten, die als eine Funktion von Kurbelwinkelpositionen abgetastet werden, von einem stabilen periodischen Muster widerspiegelt, das indikativ für einen Krümmer ohne Leckage ist.

## Revendications

1. Procédé de détection d'une fuite de soupape dans au moins une soupape au niveau d'un collecteur d'admission ou d'un collecteur d'échappement de cylindre d'un moteur de véhicule, le procédé comprenant :
l'acquisition, pendant le fonctionnement du moteur de véhicule dans des conditions de fonctionnement régulier, d'un ensemble de points de données de pression indiquant la pression dans le collecteur d'admission ou le collecteur d'échappement de cylindre pour des positions angulaires de vilebrequin couvrant des degrés de rotation angulaire de vilebrequin de telle sorte que chacune de l'au moins une soupape s'est ouverte au moins une fois, dans lequel l'ensemble de points de données de pression est échantillonné en fonction de positions angulaires de vilebrequin ; et
la détermination d'au moins une valeur de test sur la base de l'ensemble de points de données de pression, la valeur de test reflétant un écart de l'ensemble de points de données de pression échantillonné en fonction de positions angulaires de vilebrequin par rapport à un modèle périodique régulier indicatif d'un collecteur sans fuite, dans lequel une fuite de soupape est détectée sur la base d'une comparaison de l'au moins une valeur de test avec une valeur seuil.

2. Procédé selon la revendication 1, comprenant l'application d'un algorithme de reconnaissance de modèle à l'ensemble de points de données de pression pour déterminer la valeur de test et pour détecter une fuite de soupape.

3. Procédé selon l'une quelconque des revendications précédentes, dans lequel les degrés de rotation angulaire de vilebrequin sont d'environ 720 degrés.

4. Procédé selon l'une quelconque des revendications précédentes, dans lequel la valeur de test est basée sur une différence entre des points de données de pression.

5. Procédé selon l'une quelconque des revendications précédentes, dans lequel la valeur de test est basée sur une dérivée de points de données de pression par rapport à des positions angulaires de vilebrequin.

6. Procédé selon la revendication 5, dans lequel la valeur de test est basée sur une dérivée entre des points de données de pression maximale locale dans l'ensemble de points de données de pression par rapport à des positions angulaires de vilebrequin.

7. Procédé selon la revendication 5, dans lequel la valeur de test est basée sur une dérivée entre des points de données de pression minimale locale dans l'ensemble de points de données de pression par rapport à des positions angulaires de vilebrequin.

8. Procédé selon l'une quelconque des revendications 1 à 4, dans lequel la valeur de test est basée sur une différence entre des points de données de pression minimale locale et maximale locale dans l'ensemble de points de données de pression.

9. Procédé selon l'une quelconque des revendications 1 à 4, dans lequel la valeur de test est basée sur une différence entre des points de données de pression maximale locale dans l'ensemble de points de données de pression.

10. Procédé selon l'une quelconque des revendications précédentes, le moteur de véhicule comprenant un ensemble de cylindres ayant chacun au moins une soupape associée au niveau du collecteur d'admission ou du collecteur d'échappement respectif, le procédé comprenant la détermination d'une valeur de test pour chacun des cylindres et le fait de déterminer lequel des cylindres a une soupape ayant une fuite associée sur la base de laquelle des valeurs de test s'écarte de la valeur seuil.

11. Procédé selon l'une quelconque des revendications précédentes, le moteur de véhicule comprenant un ensemble de cylindres ayant chacun au moins une soupape associée au niveau du collecteur d'admission ou du collecteur d'échappement respectif, le procédé comprenant la détermination d'une valeur de test pour chacun des cylindres et le fait de déterminer lequel des cylindres a une soupape ayant une fuite associée sur la base de laquelle des valeurs de test s'écarte des autres valeurs de test.

12. Procédé selon l'une quelconque des revendications précédentes, comprenant :
lorsqu'une fuite de soupape est détectée, l'arrêt d'une alimentation en carburant vers un cylindre avec la soupape ayant une fuite.

13. Unité de commande pour détecter une fuite de soupape dans au moins une soupape au niveau d'un collecteur d'admission ou d'un collecteur d'échappement de cylindre d'un moteur de véhicule, l'unité de commande étant configurée pour :
acquérir, pendant le fonctionnement du moteur de véhicule dans des conditions de fonctionnement régulier, un ensemble de points de données de pression indiquant la pression dans le collecteur d'admission ou le collecteur d'échappement de cylindre au niveau de positions angulaires de vilebrequin couvrant des degrés de rotation angulaire de vilebrequin de telle sorte que chacune de l'au moins une soupape s'est ouverte au moins une fois, dans lequel l'ensemble de points de données de pression est échantillonné en fonction de positions angulaires de vilebrequin ; et
déterminer au moins une valeur de test sur la base de l'ensemble de points de données de pression, la valeur de test reflétant un écart de l'ensemble de points de données de pression échantillonné en fonction de positions angulaires de vilebrequin par rapport à un modèle périodique régulier indicatif d'un collecteur sans fuite, dans lequel une fuite de soupape est détectée sur la base d'une comparaison de l'au moins une valeur de test à une valeur seuil.

14. Produit de programme informatique comprenant un support lisible par ordinateur sur lequel est stocké un moyen de programme informatique pour détecter une fuite de soupape d'au moins une soupape au niveau d'un collecteur d'admission ou d'un collecteur d'échappement de cylindre d'un moteur de véhicule, le produit de programme informatique comprenant :
un code pour déterminer au moins une valeur de test sur la base d'un ensemble acquis de points de données de pression acquis pendant le fonctionnement du moteur de véhicule dans des conditions de fonctionnement régulier, dans lequel l'ensemble de points de données de pression indique la pression dans le collecteur d'admission ou le collecteur d'échappement de cylindre au niveau de positions d'angle de vilebrequin connues, dans lequel l'ensemble de points de données de pression est échantillonné en fonction de positions angulaires de vilebrequin ; et
un code pour détecter une fuite de soupape est basé sur une relation entre l'au moins une valeur de test et une valeur seuil, la valeur de test reflétant un écart de l'ensemble de points de données de pression échantillonné en fonction de positions angulaires de vilebrequin par rapport à un modèle périodique régulier indicatif d'un collecteur sans fuite.
